(19) Europäisches Patentamt
European Patent Office
Office européen des brevets

(11) **EP 2 266 178 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(21) Anmeldenummer: **09732166.5**

(22) Anmeldetag: **14.04.2009**

(51) Int Cl.:
*H02J 3/38* *(2006.01)*    *H02J 3/18* *(2006.01)*

(86) Internationale Anmeldenummer:
**PCT/EP2009/002728**

(87) Internationale Veröffentlichungsnummer:
**WO 2009/127393 (22.10.2009 Gazette 2009/43)**

(54) **WIND ENERGIEANLAGE MIT ANSCHLUSSSCHUTZEINRICHTUNG**

WIND ENERGY SYSTEM HAVING A CONNECTION PROTECTION DEVICE

INSTALLATION EOLIENNE AVEC DISPOSITIF DE PROTECTION DU RACCORDEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008 DE 102008018748**

(43) Veröffentlichungstag der Anmeldung:
**29.12.2010 Patentblatt 2010/52**

(73) Patentinhaber: **Senvion GmbH**
**22297 Hamburg (DE)**

(72) Erfinder: **LETAS, Heinz-Hermann**
**23701 Süsel (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**EP-A- 1 821 382          WO-A1-01/73518**
**DE-A1- 10 344 392        DE-A1-102007 005 165**
**JP-A- 5 300 659          US-A1- 2002 110 007**
**US-A1- 2007 121 354**

EP 2 266 178 B1

**Beschreibung**

Die Erfindung betrifft eine Windenergieanlage mit einem Rotor, einem davon angetriebenen Generator mit einem Umrichter zur Erzeugung elektrischer Leistung, die über einen Transformator, für den eine Spannungsüberwachung vorgesehen ist, in ein Netz abgegeben wird und einem Steuersystem, das eine Umrichtersteuerung umfasst, so dass eine Blindkomponente der abgegebenen Leistung einstellbar ist.

Windenergieanlagen sind üblicherweise über einen Transformator an ein Netz zur Übertragung elektrischer Leistung angeschlossen. Der Transformator dient dazu, das an der Windenergieanlage selbst anliegende, verhältnismäßig niedrige Spannungsniveau auf ein höheres Spannungsniveau (Mittelspannung oder Hochspannung) des Netzes anzuheben. Üblicherweise erzeugen Windenergieanlagen die elektrische Leistung bei einem Spannungsniveau von bis zu 1 kV (eine häufig verwendete Spannung ist 690 Volt), und diese Windenergieanlagen sind mittels des Transformators an ein Mittelspannungsnetz (Spannungsbereich ca. 20 kV) angeschlossen; einige neuere Windenergieanlagen mit hoher Leistung, wie die REpower 5M oder 6M können die von ihr abgegebene Leistung auch auf Mittelspannungsniveau bereitstellen, wobei der Transformator sich innerhalb der Windenergieanlage befindet. Die Transformatoren übertragen die gesamte von der Windenergieanlage erzeugte Leistung und sind damit insbesondere bei höheren Lastzuständen hoch belastet. Zum Schutz vor Überlastung ist es daher bekannt, eine Überwachungseinrichtung für den Transformator vorzusehen. Es ist bekannt, eine Spannungsmessung an einer Seite des Transformators vorzusehen. Mit ihr wird bestimmt, ob die Spannung in einem vorgegebenen Rahmen liegt, um so im Falle eines Verlassens des vorgegebenen Rahmens die Windenergieanlage vorsichtshalber vom Netz zu trennen.

Bei Windenergieanlagen mit Leistungen im Bereich bis zu 2 MW ist es üblich, dass die Spannung auf der Unterspannungsseite des Transformators, also windenergieanlagenseitig überwacht wird. Diese Anordnung bietet den Vorteil eines guten Schutzes der Windenergieanlage und des Transformators. Allerdings weist sie den Nachteil auf, dass je nach Lastfall durch den Transformator Spannungsunterschiede von bis zu 5 % gegenüber dem theoretischen Übersetzungsverhältnis entstehen können. Dadurch besteht die Gefahr, dass auf der Oberspannungsseite des Transformators zu große Spannungsabweichungen auftreten, also der gewünschte Rahmen nicht eingehalten wird. Bei anderen, leistungsstärkeren Windenergieanlagen wird häufig das entgegengesetzte Konzept angewendet. Es besteht darin, dass die Spannung an der Oberspannungsseite des Transformators, also netzseitig überwacht wird. Diese Anordnung bietet den Vorteil einer besseren Überwachung des Verhaltens der Windenergieanlage am zu schützenden Netz. Allerdings tritt auch hier die Situation auf, dass es über den Transformator zu unzulässigen Spannungsabweichungen an der anderen Seite, hier der Unterspannungsseite, kommen kann, die mehr als 5 % betragen. Bei einer Anordnung der Messeinrichtung an der Oberspannungsseite des Transformators besteht also die Gefahr, dass auf der Unterspannungsseite die Grenzwerte nicht eingehalten werden. Zum Schutz der Windenergieanlage sind dann ggf. besondere Maßnahmen erforderlich, wie die Überwachung der Einhaltung einer Mindestwirkleistung (zu Lasten einer an sich angestrebten Blindleistungsabgabe) zur Gewährleistung einer ausreichenden Eigenversorgung der Windenergieanlage (DE-A-103 44 392).

Das Dokument DE 10 2007 005165 offenbart eine Windenergieanlage gemäß des Obergriffs des Anspruchs 1.

Es besteht grundsätzlich die Möglichkeit, die durch den Transformator induzierten Variationen der Spannung durch eine entsprechend engere Wahl des Toleranzfelds auszugleichen, jedoch hat dies den Nachteil, dass damit die möglichen Arbeitspunkte für die Windenergieanlage (beträchtlich) eingeschränkt sind, was zu entsprechender Verringerung der Energieausbeute führt. Die Wahl eines engeren Toleranzrahmens führt daher zu einer Verringerung des Wirkungsgrads und -plans damit zu spürbaren Ertragsverlusten.

Der Erfindung liegt die Aufgabe zugrunde, eine verbesserte Windenergieanlage der eingangs genannten Art sowie ein Betriebsverfahren hierfür anzugeben, welches die oben genannten Nachteile vermeidet.

Die Lösung gemäß der vorliegenden Erfindung liegt in den Merkmalen der unabhängigen Ansprüche und vorzugsweise in denjenigen der abhängigen Ansprüche.

Bei einer Windenergieanlage mit einem Rotor, einem davon angetriebenen Generator mit einem Umrichter zur Erzeugung elektrischer Leistung, die über einen Transformator, für den eine Spannungsüberwachung vorgesehen ist, in ein Netz abgegeben wird und einem Steuersystem, das eine Umrichtersteuerung umfasst, wobei das Steuersystem ein Stellsignal für eine Blindkomponente an den Umrichter anlegt, ist erfindungsgemäß vorgesehen, dass eine Spannungsmesseinrichtung am Transformator angeordnet ist, deren Spannungssignal an einem Eingang eines zustandsabhängigen Sollwertschiebers angelegt ist, dessen Ausgangssignal an ein Begrenzungsmodul für die auf den Umrichter wirkende Blindkomponente angelegt ist.

Zuerst seien einige verwendete Begriffe erläutert:

Unter einer Blindkomponente wird ein elektrischer Parameter verstanden, welcher die Höhe des Blindanteils von Leistung oder Strom angibt. Es ist also für die Erfindung unerheblich, ob die Blindkomponente sich auf Leistung oder Strom bezieht. Gewünschtenfalls kann unter Berücksichtigung der Spannung zwischen den beiden Größen umgerechnet werden. Aus Gründen einer übersichtlicheren Darstellung wird im folgenden Text die Blindkomponente als Blindstrom angenommen; die Ausführungen gelten für die Blindleistung sinngemäß.

Unter zustandsabhängig wird verstanden, dass der Wert für die Spannung, den Strom und/oder die Leistung als Signal an den Sollwertschieber angelegt ist. Der Wert kann hierbei direkt gemessen sein oder kann aus anderen Größen indirekt bestimmt sein.

Die Erfindung beruht auf dem Gedanken, mittels einer gezielten Blindstromführung in Abhängigkeit von der Spannung die Windenergieanlage so zu betreiben, dass nicht nur ein Schutz der Windenergieanlage selbst, sondern auch ein Schutz des Transformators und des Netzes insbesondere vor überhöhten Spannungen erreicht wird. Die Erfindung hat erkannt, dass ein Schlüssel zu dem Problem der Gefahr unzulässiger Spannungen am Transformator in der Blindkomponente des Transformators liegt. Genauer gesagt liegt der Schlüssel darin, dass der Blindstromfluss durch den Transformator die Hauptfeldspannung des Transformators und damit die Spannung auf der Unterspannungsseite um einen beträchtlichen Betrag (der einige Prozentpunkte erreichen und überschreiten kann) verändert. Dies bedeutet, dass zusätzlich zur Toleranz auf der Netzseite die Spannung auf der Unterspannungsseite, welche ebenfalls innerhalb eines bestimmten Toleranzfelds zu bleiben hat, aufgrund des Blindstromflusses durch den Transformator verändert wird.

Die Erfindung hat diesen Zusammenhang zwischen dem Spannungsverhalten über den Transformator hinweg und dem Fluss der Blindkomponente erkannt und macht ihn sich zunutze zur Lösung der erfindungsgemäßen Aufgabe. Sie sieht dazu vor, eine gezielte Führung der Blindkomponente in Abhängigkeit von der Spannung am Transformator zu bewirken, und zwar in Gestalt des erfindungsgemäß vorgesehenen Sollwertschiebers. Die Erfindung macht sich zunutze, dass moderne Windenergieanlagen nicht nur Wirkleistung in das Netz einspeisen, sondern auch zur Abgabe von Blindleistung ausgebildet sind; dazu weist die Windenergieanlage eine Einstellmöglichkeit auf, über die eine Blindkomponente, wie Blindstromanteil, Blindleistungswert oder ein Leistungsfaktor eingestellt werden kann. Derartige Regelungen sind an sich bekannt. Die Erfindung setzt hier an, indem sie die bereits vorhandene Regelung so ergänzt, um mittels des erfindungsgemäß vorgesehenen Sollwertschiebers, der vom Spannungs- oder Blindleistungszustand der Windenergieanlage und des Netzes, insbesondere der Spannung am Transformator abhängig ist, bei Bedarf eine Veränderung des vorgesehenen Blindleistungsmaßes bewirkt, um so die Spannung am Transformator (die weitgehend durch die Hauptfeldspannung bestimmt ist) durch eine gezielte Führung der Blindkomponente zu beschränken. Dies geschieht in der Regel in der Weise, dass bei Überspannungen im Netz durch den zustandsabhängigen (hier spannungsabhängigen) Sollwertschieber die Blindkomponente zum untererregten hin verschoben wird. Für den Blindstrom bedeutet dies, dass er (wie im Erzeugerzählpfeilsystem) bei Untererregung negativ wird. Damit wird sowohl die Spannung im vorgelagerten Netz durch den Spannungsabfall an Reaktanzen des Netzes abgesenkt, wie auch auf der Unterspannungsseite des Transformators und an der Windenergieanlage. Entsprechend wirkt der zustandsabhängige Sollwertschieber bei einer Unterspannung im Netz durch eine Änderung der Blindkomponente zum übererregten hin, wodurch in Folge des Spannungsabfalls an den Netzreaktanzen die Spannung im vorgelagerten Netz, wie auch auf der Unterspannungsseite des Transformators und der Windenergieanlage angehoben wird. Die Auswirkungen von unzulässigen Über- bzw. Unterspannungen werden dadurch sukzessive verringert (bspw. von 30 % Abweichung im Hochspannungsnetz auf noch 20 % im Mittelspannungsnetz und nur noch 15 % an der Windenergieanlage).

Die Erfindung erreicht damit mit nur geringem Zusatzaufwand den kombinierten Schutz, d. h. den Schutz sowohl des Netzes, des Transformators als auch der Windenergieanlage. Dabei ist es im Prinzip unerheblich, ob die Überwachung der Spannung am Transformator auf dessen Oberspannungsseite oder auf seiner Unterspannungsseite erfolgt. In beiden Fällen wird der von Haus aus fehlende Schutz auf der jeweils anderen Seite durch die erfindungsgemäße Funktionalität erreicht. Für die Erfindung genügt daher die in der Regel bereits vorhandene Hardware zur Messung der Transformatorspannungen an einer Seite des Transformators (sei es an der Oberspannungsseite oder Unterspannungsseite). Zusätzlicher Hardwareaufwand für die Erfindung fällt daher nicht oder nur minimal an, da auf vorhandene Messgrößen zurückgegriffen werden kann.

Die Erfindung ermöglicht außerdem eine bessere Ausnutzung des Transformators. Eine Überdimensionierung, wie sie bisher wegen der Überschreitung der Toleranzgrenze für die Spannung vorgenommen wurde, ist damit nicht mehr erforderlich. Es können so kleinere und effizientere Transformatoren eingesetzt werden. Gleichzeitig verbessert sich sowohl der Schutz des Netzes als auch derjenige der Windenergieanlage.

Um ein möglichst schnelles Ansprechen der Sollwertverschiebung zu erhalten, wirkt der Sollwertschieber zweckmäßigerweise direkt auf den Umrichter ein. Darunter ist sowohl eine unmittelbare Einwirkung auf die aktiven Schaltelemente des Umrichters wie auch auf seine schnelle Umrichtersteuerung zu verstehen. Unter einer schnellen Umrichtersteuerung wird derjenige Steuerkreis verstanden, welcher wiederum direkt auf die aktiven Elemente des Umrichters einwirkt; er ist zu unterscheiden von den in der Regel deutlich langsameren Steuerkreisen der Betriebssteuerung selbst. Damit wird ein deutlich verbessertes Verhalten der Windenergieanlage im Netz in Bezug auf ein Durchstehen von transienten Vorgängen erreicht, wie z. B. kurzzeitigen Spannungsspitzen (HVRT - High Voltage Ride Through) bzw. Kurzschlüssen (LVRT - Low Voltage Ride Through).

Zur Vergrößerung der erfindungsgemäßen Wirkung des Sollwertschiebers kann weiter vorgesehen sein, dass er mit einem Lastschiebemodul zusammenwirkt, welches bei einer Unter- oder Überspannung derart auf das Steuersystem einwirkt, dass der Wirkanteil der abgegebenen Leistung bzw. der Stroms zugunsten des Blindanteils verringert ist. Damit wird eine Prioritätssteuerung erreicht, bei welcher die Wirkströme im Bedarfsfall reduziert werden, um die (beschränkte) Stromkapazität des Umrichters in höherem Maße für die Erzeugung von Blindstrom heranziehen zu können. Der Beitrag, den Windenergieanlagen gerade zu Zeiten hoher Last zur Stützung des Netzes beitragen können, wird damit signifikant erhöht. Der dafür erforderliche Zusatzaufwand ist hingegen minimal, und ebenso sind die sich ergebenden Ertragseinbußen aufgrund der verringerten Wirkleistungslieferung vernachlässigbar, da eine derartige Verschiebung aufgrund der Prioritätssteuerung bei dynamischen Spannungsabweichungen (HVRT, LVRT) mit einer Dauer von nur wenigen Millisekunden zum Einsatz kommt.

Vorzugsweise ist ein Temperatursensor für den Transformator vorgesehen, dessen Signal als weiteres Zustandssignal an einen Eingang des Sollwertschiebers angelegt ist. Vorzugsweise ist der Temperatursensor am Kern des Transformators angeordnet. Dies beruht auf der erfindungsgemäßen Kenntnis, dass wegen der Bedeutung der Blindkomponente für die Belastung des Transformators der Transformatorkern besonders überwacht werden muss, da er sich in der Regel ausschließlich durch die anliegende Spannung, genauer gesagt die interne Hauptfeldspannung erwärmt. Es ist Verdienst der Erfindung erkannt zu haben, dass für das hier zugrundeliegende Problem die Belastung des Transformators durch Wirkstromübertragung unerheblich sein kann, und zwar insbesondere bei (Gießharz-)Transformatoren mit forcierter Belüftung. Die Erfindung hat erkannt, dass eine kritische Situation für den Transformator auch dann entstehen kann, wenn allein die Netzspannung hoch ist, wodurch der Transformator bereits im Leerlauf überhitzen kann, soweit nicht gemäß der Erfindung Gegenmaßnahmen ergriffen werden. Die Erfindung hat weiter erkannt, dass die Hauptfeldspannung beim Betrieb mit Blindleistung neben der Spannung wesentlich von dem der über den Transformator übertragenen Blindkomponente beeinflusst wird, so dass im übererregten Betrieb wegen der damit verbundenen hohen Eisenverluste im Kern es zu einer unzulässigen Erwärmung und damit zu einer Abschaltung kommen kann. Dem wird durch die Anordnung des Temperatursensors am Kern in Verbindung mit dem erfindungsgemäßen Sollwertschieber entgegengewirkt.

Vorzugsweise weist das Steuersystem weiter eine Betriebssteuerung auf, für die ein zweiter gleichartiger Sollwertschieber vorgesehen ist. Unter gleichartig wird hier verstanden, dass der Sollwertschieber im Wesentlichen dieselbe Funktionalität besitzt wie der oben genannte, jedoch kann bei Bedarf zwecks einfacherer Implementierung das dynamische Verhalten langsamer sein, um so besser auf die in der Regel deutlich langsamere Abtastrate der Betriebssteuerung abgestimmt zu sein. Mittels dieses zweiten Sollwertschiebers kann eine Überwachung der erfindungsgemäßen Funktionalität erreicht werden, insbesondere kann eine Windenergieanlage abgeschaltet werden, wenn die Berechnung mittels des zweiten Sollwertschiebers ergibt, dass - vor allem im quasistationären oder stationären Betrieb - doch ein Grenzwert überschritten werden könnte. Mit der damit erreichten Überwachung des erfindungsgemäßen Sollwertschiebers wird die Sicherheit einer entsprechend ausgerüsteten Windenergieanlage erhöht. Unter einer niedrigen Abtastrate wird vorzugsweise eine Abtastrate verstanden, die um mindestens eine Größenordnung (1:10) kleiner ist als die des oben genannten Sollwertschiebers gemäß der Erfindung.

Vorzugsweise ist ein Maß für die von der Windenergieanlage abgegebene Blindkomponente an einem weiteren Eingang des zweiten Sollwertschiebers angelegt. Damit ist es ermöglicht, dass ein Spannungssignal für den Sollwertschieber auf einer an sich beliebigen Seite des Transformators abgegriffen werden kann (je nachdem wo bereits Messhardware vorhanden ist) und unter Berücksichtigung der durch den Transformator übertragenen Blindkomponente erforderlichenfalls die Spannungsmesswerte auf der anderen Seite des Transformators berechnet werden können. Damit genügt das Vorsehen von Messhardware auf einer Seite des Transformators, so dass zusätzlich auf der anderen Seite entbehrlich ist.

Vorzugsweise umfasst das Steuersystem weiter ein Kontrollmodul, das mit einem Netzschutzrelais mit variablem Grenzwert zusammenwirkt, dessen Grenzwert durch die abgegebene Blindkomponente mit bestimmt ist. Damit kann die erfindungsgemäße Sollwertverschiebung auch zur Ansteuerung des Netzschutzrelais verwendet werden, so dass das verbesserte Schaltverhalten auch dem Schutz der Windenergieanlage zugute kommt.

Vorzugsweise ist der Sollwertschieber derart ausgebildet, dass er einen PI-Regler mit einem Begrenzer umfasst. An einem Eingangsanschluss des Reglers ist der Messwert für die Spannung am Transformator, vorzugsweise an der Unterspannungsseite, angelegt und dabei wird eine Differenz zu einer Maximalspannung gebildet. Dieser Wert wird für das P-Glied und, zur stationären Genauigkeit, über das I-Glied des Reglers geführt, wobei die Parameter so bestimmt sind, dass als Ausgangsleistung ein Signal für eine Blindkomponente (bspw. $Q_{\text{obere Grenze}}$ bzw. $I_{\text{obere Grenze}}$) ausgegeben sind. Dieses Signal wird durch den Begrenzer geführt, der es auf einen einstellbaren Wert für Mindest- und Höchstwerte beschränkt. Zweckmäßigerweise ist eine zweikreisige Reglerstruktur vorgesehen, wobei ein Kreis für eine obere Grenze, wie vorstehend beschrieben, und ein zweiter Kreis für eine untere Grenze mit entsprechendem Aufbau vorgesehen ist. Der eine Kreis dient dann für Über- und der andere für Unterspannung. Der PI-Regler ist vorteilhafterweise so aufgebaut, dass aus einer Spannungsdifferenz zu einem Grenzwert, sei es ein Maximal- oder ein Minimalgrenzwert, ein Korrekturwert für die Blindkomponente bestimmt wird. Bei der Blindkomponente kann es sich, wie vorstehend beschrieben, um ein Maß für eine Blindleistung oder einen Blindstrom handeln. Eine derartige Struktur bietet den Vorteil, dass sie konzeptionell einfach ist. Allerdings ist eine Messung der Spannung auf der Unterspannungsseite des Transformators erforderlich. Mit Vorteil kann daher das Regelkonzept mit einem Streckenmodell des Transformators kombiniert sein, so dass eine Messung der Spannung auf der Netzseite des Transformators genügt, und über das Streckenmodell Ersatzmesswerte bestimmt werden können. Der zusätzliche Aufwand für eine gesonderte Messstelle auf der Unterspannungsseite entfällt dann.

Bei einer anderen, bevorzugten Ausführungsform ist der Sollwertschieber derart ausgebildet, dass er eine Blindkomponentensteuerung und einen Begrenzer aufweist. Eine Steuerung bietet gegenüber einer Regelung den Vorzug, dass sie dank fehlender Rückkoppelung sehr schnell und nahezu verzögerungsfrei wirken kann. Damit lässt sich eine schnellere Begrenzung und damit ein besserer und gezielterer Schutz, insbesondere für die empfindliche Elektronik der Windenergieanlage, erreichen. Weiter bietet die Steuerung den Vorteil, dass die in der Regel aufwendige Ermittlung von Reglerparametern nicht erforderlich ist. Vorzugsweise ist die Blindkomponentensteuerung derart ausgebildet, dass sie aus Signalen für die Spannung und die Blindleistung einen Blindkomponentenkorrekturwert direkt bestimmt. Dazu ist die Blindkomponentensteuerung vorzugsweise als ein zweidimensionales Kennlinienglied ausgebildet. Darunter wird ein Glied verstanden, welches Grenzkurven für zulässige Spannungs-/Blindleistungs- bzw. Blindstromkombinationen enthält. Alternativ kann auch vorgesehen sein, dass anstelle des Kennlinienglieds eine Sollwertmatrix vorgesehen ist. Eine solche eignet sich besonders gut zur Implementierung in einem Rechner, bspw. in Gestalt einer LUT (Look-Up Table). Dies eröffnet die Möglichkeit, die Grenzkurven nicht-linear zu gestalten, weiter können auch stetige, aber nichtglatte Kurvenverläufe leicht vorgesehen sein. Wie auch im Fall der Ausführung bei der Regelung ist vorzugsweise eine zweikreisige Steuerstruktur mit einem Kreis für Über- und einem Kreis für Unterspannung vorgesehen. Ebenso kann wie bei der Variante mit der Regelung vorgesehen sein, dass Messwerte auf der anderen Seite des Transformators gewonnen werden, und mit einem Streckenmodell umgerechnet werden.

Optional kann eine gesonderte Kennlinie für einen dynamischen Betriebsfall vorgesehen sein. Dazu sind die Kennlinienglieder vorzugsweise derart ausgebildet, dass eine weitere Kennlinie implementiert ist und bei Anlegen eines Umschaltsignals auf die andere Kennlinie umgeschaltet wird. Die Betriebssteuerung weist vorzugsweise ein Dynamiksteuermodul auf, welches nach vorgebbaren Kriterien das Umschaltsignal ausgibt. Mit der zusätzlichen Kennlinie können Grenzwerte kurzzeitig hochgesetzt werden, beispielsweise kann mehr Strom vom Umrichter eingespeist werden. Dank der Begrenzung auf dynamische Fälle kommt es dennoch nicht zu Schäden aufgrund thermischer Überhitzung. Entsprechendes kann in Bezug auf die Parameter bei der Regelung vorgesehen sein.

Die Erfindung erstreckt sich weiter auf ein Netzschutzverfahren für Windenergieanlagen mit einem Rotor, einem davon angetriebenen Generator mit einem Umrichter zur Erzeugung elektrischer Leistung, die über einen Transformator, an dem eine Spannung überwacht wird, in ein Netz abgegeben wird und einem Steuersystem, das eine Umrichtersteuerung umfasst, wobei ein Blindanteil der abgegebenen Leistung über eine Blindkomponente eingestellt wird, gekennzeichnet durch Messen einer Spannung am Transformator, Bestimmen eines Korrektursignals für die Blindkomponente mittels eines zustandsabhängigen Sollwertschiebers, und Verwenden dieses Korrektursignals zur Begrenzung der Blindkomponente.

Zur näheren Erläuterung des Verfahrens wird auf vorstehende Beschreibung verwiesen.

Die Erfindung wird nachfolgend unter Bezugnahme auf die beigefügte Zeichnung erläutert, in der vorteilhafte Ausführungsbeispiele dargestellt sind. Es zeigen:

Fig. 1     eine Übersichtsansicht für eine Windenergieanlage, die über einen Transformator an ein Netz angeschlossen ist;

Fig. 2 a-d     Schaltbilddarstellungen für verschiedene Anschlussarten über einen Transformator;

Fig. 3 a, b     Ersatzschaltbilder für den Transformator;

Fig. 4 a, b     Wicklungsaufbau und Magnetfeld-Charakteristika zu Fig. 3;

Fig. 5     ein vereinfachtes Eratzschaltbild für den Transformator;

Fig. 6     eine Blockdarstellung für ein erstes Ausführungsbeispiel der Erfindung;

Fig. 7     eine Blockdarstellung für ein zweites Ausführungsbeispiel der Erfindung;

Fig. 8     Grenzkurven für ein Kennlinienglied für das zweite Ausführungsbeispiel;

Fig. 9     eine alternative Auslegung des Kennlinienglieds; und

Fig. 10     Spannungs-Blindleistungsdiagramme über den Transformator ohne und mit der Erfindung.

Es wird der Übersicht halber zuerst an Hand eines schematischen Beispiels der Aufbau einer Windenergieanlage erläutert, wie sie dem später erläuterten Ausführungsbeispiel der Erfindung zugrunde liegt. Eine in ihrer Gesamtheit mit der Bezugsziffer 1 bezeichnete Windenergieanlage umfasst einen Turm 10 mit einem an dessen oberem Ende in Azimuthrichtung drehbar angeordneten Maschinenhaus 11. An dessen einer Stirnseite ist ein Windrotor 12 drehbeweglich angeordnet, der über eine (nicht dargestellte) Rotorwelle einen Generator 2 zur Erzeugung elektrischer Energie antreibt. Der Generator 2 kann an sich von beliebiger Art sein, üblicherweise handelt es sich um eine Synchron- oder um eine doppelt gespeiste Asynchronmaschine. Der Generator 2 ist mit einem Umrichter 3 verbunden. Daran angeschlossen ist eine Anschlussleitung 13, welche durch den Turm 10 zu einem am Turmfuß angeordneten Mittelspannungstransformator 8 führt. Dem Mittelspannungstransformator 8 ist ein Netzschutzschalter 18 zugeordnet. Über eine Netzanschlussleitung 19 gibt der Mittelspannungstransformator 8 die von der Windenergieanlage 1 erzeugte elektrische Leistung an ein Netz 9 ab. Bei dem Netz 9 kann es sich um ein öffentliches Energieübertragungsnetz oder um ein internes Netz eines Windparks handeln.

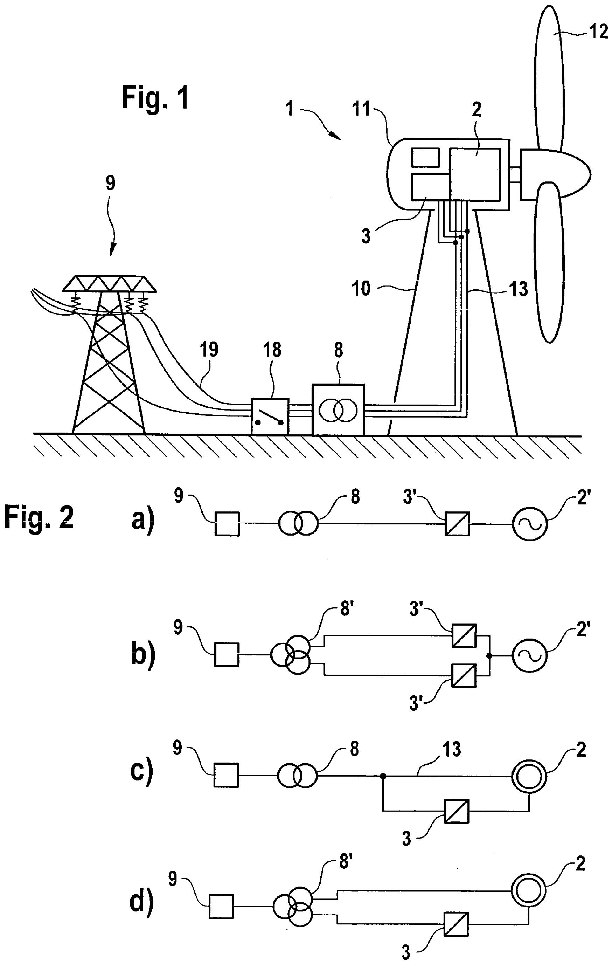

Der Fluss der elektrischen Leistung, die von dem Generator 2 unter der Kraft des Windrotors 12 erzeugt wird, ist in verschiedenen Ausführungsformen der Windenergieanlagen in Figur 2 dargestellt. Figur 2A zeigt eine Ausführungsform mit einem Vollumrichter 3'. Hier ist der Generator 2' beispielsweise als Synchrongenerator ausgeführt und kann mit an sich beliebiger Drehzahl in Abhängigkeit von der Windstärke rotieren, wobei die von ihm erzeugte elektrische Energie eine der Drehzahl des Windrotors 12 entsprechende Frequenz aufweist. Der Umrichter 3' besteht aus (hier nicht einzeln dargestellt) einem generatorseitigen Wechselrichter, einem netzseitigen Wechselrichter mit einem dazwischen angeordneten Zwischenkreis. Der von dem Generator 2' erzeugte Wechselstrom wird von dem maschinenseitigen Wechselrichter zu Gleichstrom oder Gleichspannung umgeformt und in den Zwischenkreis eingespeist, woraus er über den netzseitigen Wechselrichter mit einer Frequenz, die einer Netzfrequenz entspricht, über den Transformator 8 in das Netz 9 eingespeist wird. Bei dieser Bauart fließt die gesamte vom Generator 2' erzeugte elektrische Leistung über den Umrichter 3. Von dort wird sie über die Anschlussleitung 13 und den Transformator 8 und die Netzleitung 19 in das Netz 9 eingespeist.

Die Figur 2B zeigt eine Variante, bei welcher der Transformator 8' als ein Dreiwicklungstransformator mit zwei Unterspannungswicklungen ausgeführt ist. An jeder Wicklung ist ein Umrichter 3' angeschlossen, welche gemeinsam mit dem Generator 2' verbunden ist. Damit wird die von dem Generator 2 erzeugte Leistung auf zwei Zweige aufgeteilt, so dass jeder Umrichter 3' weniger Leistung zu übertragen braucht. Dies ist für leistungsstarke Windenergieanlagen von Bedeutung. Es versteht sich, dass dieses Prinzip der Aufteilung auch auf drei oder mehr Zweige angewendet werden kann.

In Figur 2C ist eine Variante gezeigt, bei welcher der Generator 2 als ein doppelt gespeister Asynchrongenerator ausgeführt ist. Dieser umfasst eine Statorwicklung (äußerer Kreis) und eine Rotorwicklung (innerer Kreis). Die Statorwicklung ist starr mit der Anschlussleitung 13 und dem Transformator 8 und darüber mit Netz 9 verbunden. Die Rotorwicklung ist mit dem Umrichter 3 verbunden, dessen anderes Ende an die Anschlussleitung 13 angeschlossen ist. Bei dieser Bauart fließt nur ein Teil der von dem Generator 2 erzeugten Leistung über den Umrichter 3 (üblicherweise etwa ein Drittel), während der Hauptteil direkt über den Transformator 8 in das Netz 9 fließt. Der Umrichter 3 kann daher bei dieser Bauart kleiner dimensioniert sein.

Figur 2D zeigt eine Variante von Figur 2C, bei welcher wiederum ein Dreiwicklungstransformator 8' eingesetzt ist, der zwei Unterspannungswicklungen aufweist. An die eine Unterspannungswicklung ist der Stator des Generators 2 direkt angeschlossen, während an die andere Unterspannungswicklung der Rotor über den Umrichter 3 angeschlossen ist. Vorzugsweise sind die Unterspannungswicklungen für unterschiedliche Spannungsniveaus ausgelegt, so dass an der mit dem Stator verbundenen Unterspannungswicklung ein höheres Spannungsniveau herrscht als an der mit dem Umrichter verbundenen. Dies ermöglicht eine effiziente Anschaltung auch von Windenergieanlagen mit sehr hoher Leistung (wie 3000 kW und mehr).

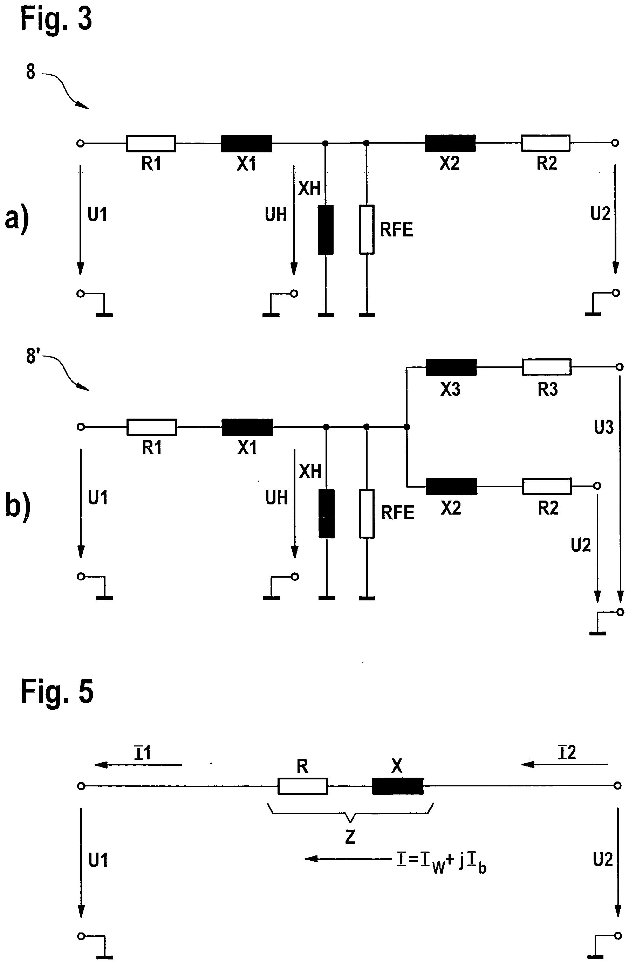

Wie man aus der vorstehenden Darstellung erkennt, kommt dem Transformator 8, 8' insoweit große Bedeutung zu, dass bei jeder Variante über ihn die volle Leistung fließt. Sein Aufbau und sein elektrisches Wirkschema werden nachfolgend kurz erläutert. In Figur 3A ist ein einpoliges Ersatzschaltbild für einen Transformator 8 mit zwei Wicklungen und in Figur 3B ein einpoliges Ersatzschaltbild für einen Transformator 8' mit drei Wicklungen dargestellt. Hierbei bezeichnen die Spannungen U1, U2 und gegebenenfalls U3 die Spannungen der drei Wicklungen, wobei die Ziffer 1 die Oberspannungsseite kennzeichnet und die Ziffer 2 sowie gegebenenfalls Ziffer 3 die Wicklungen der Unterspannungsseite kennzeichnen. Dementsprechend stellen die Widerstände R1, R2 und gegebenenfalls R3 den Ohmschen Widerstand der Wicklungen dar und sind ein Maß für die Wicklungsverluste. Die Reaktanzen X1, X2 und gegebenenfalls X3 stellen Wicklungs-Streureaktanzen dar. Mit XH ist die Hauptreaktanz bezeichnet, welche die eigentliche Magnetisierung des Transformators 8, 8' bewirkt. Parallel geschaltet ist ein Widerstand RFE, der die Ohmschen Verluste des Magnetkerns darstellt. Es sei angemerkt, dass im Betrieb die genannten Reaktanzen und Widerstände Spannungsteiler für die an der Hauptreaktanz XH abfallende Spannung darstellen, welche als Hauptfeldspannung UH bezeichnet wird.

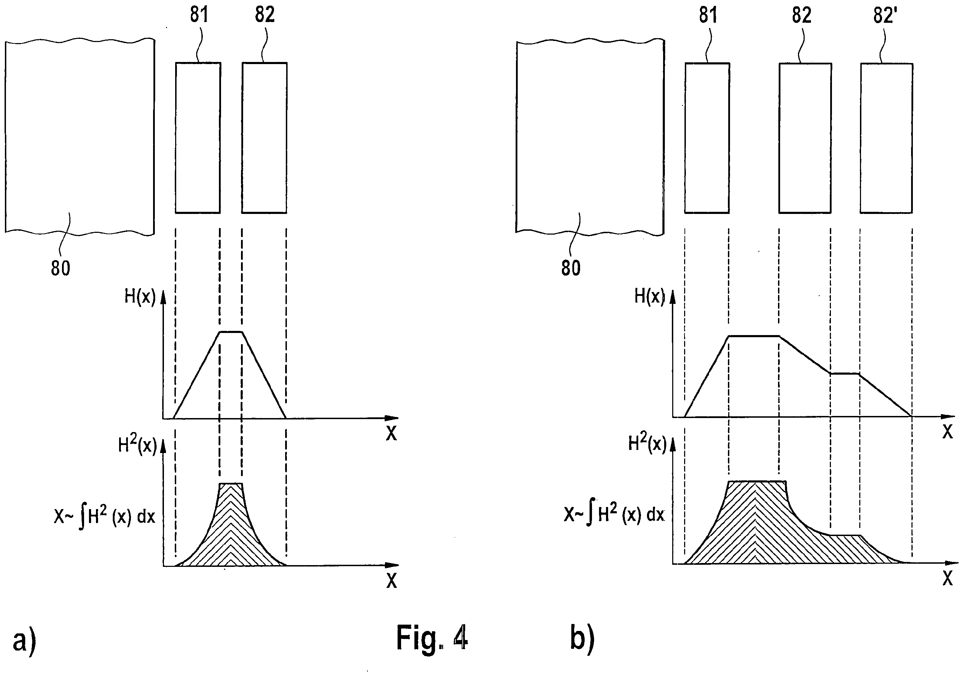

Der Wicklungsaufbau und der entsprechende Verlauf der Streureaktanz X sind in Figur 4A für Niederspannungstransformatoren und in Figur 4B für Mittelspannungstransformatoren dargestellt.

Aufgrund der thermischen Belastung des Transformators sind die Wicklungen 81, 82 nicht direkt auf einem Transformatorschenkel 80, sondern dazwischen befindet sich ein Spalt zur Durchführung von Kühlmedium (forcierte Kühlung). Die dicht am Transformatorschenkel 80 angeordnete Wicklung ist die Wicklung 81 für die Unterspannung (wegen der geringeren erforderlichen Isolationsabstände) und die weiter entfernt angeordnete Wicklung 82 ist diejenige für die Oberspannung. In dem ersten Diagramm unterhalb der Darstellung der Wicklungsanordnung ist, abgestimmt auf die räumliche Anordnung der Wicklungen, die sich ergebene magnetische Feldstärke H über den Ort x dargestellt. Gemäß den Durchflutungssatz steigt sie von innen nach außen über die erste Wicklung, die Unterspannungswicklung 81, hinweg an, erreicht im Luftspalt zu der Oberspannungswicklung 82 ein Maximum, und fällt dann wieder linear ab, bis sie schließlich an der Außenseite der Oberspannungswicklung 82 auf den Ausgangswert zurückfällt. In dem darunter liegenden Diagramm ist das Quadrat der magnetischen Feldstärke dargestellt, wobei durch Schraffur die eingeschlossene Fläche hervorgehoben ist. Mathematisch betrachtet handelt es sich bei der Fläche um das Integral der quadratischen magnetischen Feldstärke, mithin also ein Maß für die Induktivität X. Man erkennt in der linken Hälfte des Diagramms die Streuinduktivität X2 der Unterspannungswicklung 81, in der rechten Hälfte die Streuinduktivität X1 der Oberspannungswicklung 82, und beide zusammen ergeben die gesamte Streuinduktivität X. Figur 4B zeigt eine entsprechende Darstellung für einen Mittelspannungstransformator mit geteilter Oberspannungswicklung 82, 82', die zur besseren Kühlung einen weiteren Kühlspalt zwischen den Teilwicklungen 82 und 82' aufweist. Der Verlauf der magnetischen Feldstärken H und damit auch der Induktivität X folgt den oben erläuterten Prinzipien.

Man erkennt, dass der größte Wert der Reaktanz X im Bereich des Zwischenraums zwischen Unter- und Oberspannungswicklung 81, 82 erreicht wird. Dementsprechend weist die durch die Hauptreaktanz maßgeblich bestimmte Hauptfeldspannung dort ihr Maximum auf. Man kann also sagen, dass bei üblichen Transformatoren mit typischen Werten für die Widerstände R1, R2 und gegebenenfalls R3 sowie X1, X2 und gegebenenfalls X3 ein Spannungsabfall von etwa 1% in Phase mit der Spannung durch die Widerstände entsteht, während ein Spannungsabfall von in der Regel weniger als 10%, meist um die 6% in Folge der Reaktanzen quer zur Spannung entsteht. Die Gesamtreaktanz setzt sich aus den von jeder Wicklung stammenden Anteilen zusammen. Da der Anteil der Unterspannungswicklung 81 klein ist, entspricht die Hauptfeldspannung näherungsweise der Spannung auf der Unterspannungsseite.

Dies hat Konsequenzen für das thermische Verhalten des Transformators 8, 8', und zwar insbesondere für solche Transformatorbauarten mit Zwischenräumen zwischen den Wicklungen, wie beispielsweise Gießharztransformatoren mit forcierter Kühlung. Wegen der Luftspalte für die forcierte Kühlung zwischen dem Kern und den Wicklungen sind diese Bereiche thermisch voneinander im beträchtlichen Maß entkoppelt. Die Erwärmung des Transformatorkerns mit den Schenkeln 80 ist unabhängig von der der Wicklung 81, 82, 82'. Die Erwärmung der Wicklungen 81, 82, 82' ergibt sich in Abhängigkeit von dem sie durchfließenden Strom, also der Strombelastung, während die Erwärmung des Kerns (dargestellt als der Transformatorschenkel 80) im Wesentlichen durch magnetische Verluste im Eisen bestimmt ist. Diese ändern sich in Abhängigkeit von der Hauptfeldspannung (die, wie gesagt, näherungsweise der Spannung auf der Niederseite entspricht). Diese Anordnung bringt es also mit sich, dass der Kern des Transformators bereits ohne Last, also im Leerlauf, beträchtlich erwärmt werden und überhitzen kann.

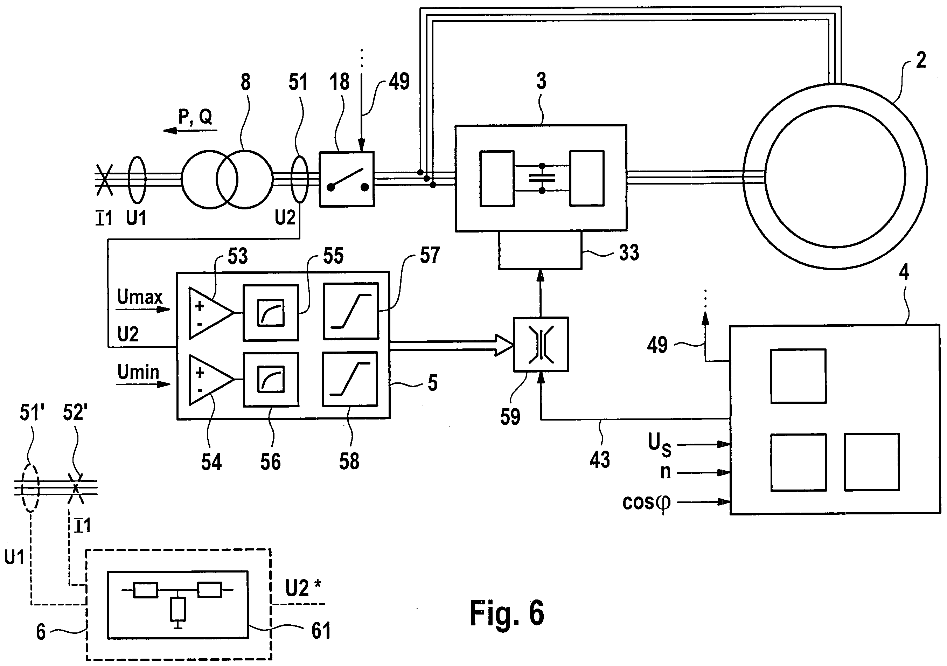

Gemäß der Erfindung ist daher vorgesehen, dass zum Schutz vor übermäßiger Erwärmung der Lastfluss durch den Transformator 8, 8' so durch Verändern der Blindkomponente geführt wird, und zwar so, dass eine zu hohe Hauptfeldspannung im Dauerbetrieb vermieden wird. Die Gefahr einer Überhitzung bereits bei niedriger Last oder gar Leerlauf wird damit vermieden. Vorzugsweise ist weiter vorgesehen, dass der Kern und die Wicklungen mit eigenen Temperatursensoren (s. Fig. 6) zur Sicherheit überwacht sind.

Aufgrund dieser Zusammenhänge sieht die Erfindung einen Schutz des Transformators vor schädlicher Überspannung und Überhitzung vor. Dies sei an einem weiter vereinfachten Beispiel in Fig. 5 erläutert, in welchem der Transformator 8, 8' anstelle des in Figur 3A angegebenen Ersatzschaltbildes ersetzt ist durch eine einfache Reihenschaltung eines Widerstands R und einer Reaktanz X, die zu einem komplexen Scheinwiderstand Z zusammengefasst sind. Damit ergibt sich ohne weiteres die Spannung auf der Unterspannungsseite U2 als Summe aus der Spannung auf der Oberspannungsseite U1 plus den Spannungsabfall über dem komplexen Widerstand Z, also:

$$U2 = U1 + Z * I, \text{ wobei } Z = R + j * X$$

ist und

$$I = Iw + j * Ib$$

ist.

Hier wird für den Blindstrom wie im Erzeugerzählpfeilsystem angenommen, dass ein übererregter Blindstrom negativ ist. Dies bedeutet, dass jeder übererregte Blindstrom negativ wird und die übererregte Blindleistung positiv wird.

Setzt man obiges ineinander ein, so ergibt sich:

$$U2 = (U1 + R * Iw - X * Ib) + j * (X * Iw + R * Ib).$$

Der erste Term vor dem zentralen Pluszeichen ist der Realteil und kann wegen des sehr kleinen Ohmschen Widerstands R vereinfacht werden zu U1 - X * Ib. Der Term nach dem zentralen Pluszeichen ist der Imaginärteil und stellt nur eine Winkeldrehung im Zeigerdiagramm dar, die den Betrag der Spannung nur wenig beeinflusst und deshalb vernachlässigt wird. Die Formel vereinfacht sich damit zu:

$$U2 = U1 - X * Ib.$$

Aus der Formel ist ohne weiteres zu ersehen, dass bei negativem Ib, also bei Übererregung, die Spannung U2 erhöht wird und bei positivem Ib, also bei Untererregung, die Spannung U2 abgesenkt wird.

Die Erfindung hat erkannt, dass auf der Basis dieser Vereinfachung für den Transformator eine effiziente und wenig aufwendige Regelung beziehungsweise Schutzfunktion erreicht werden kann. Dies sei nachfolgend anhand zweier Ausführungsbeispiele erläutert.

In Fig. 6 ist ein Blockdiagramm eines ersten Ausführungsbeispiels der Erfindung dargestellt. Es zeigte schematisch den Generator 2, den Umrichter 3 und den Transformator 8, über den die vom Generator 2 erzeugte elektrische Energie in das Netz 9 eingespeist wird. Ferner dargestellt ist das Steuersystem 4, das als Betriebssteuerung für die Windenergieanlage fungiert. Es weist mehrere Eingänge 41 für Betriebs- und Sollgrößen, wie Spannung $U_s$, Drehzahl n und Leistungsfaktoren cos φ auf. Für die Einstellung des Blindstroms ist eine Leitung für ein Blindkomponentenstellsignal 43 vorgesehen, die an den Umrichter 3, genauer gesagt an eine schnelle Umrichterregelung 33 angeschlossen ist, welche in Abhängigkeit von dem eingestellten Signal für den Blindleistungskomponente die aktiven Schalter des Umrichters 3 betätigt, um einen entsprechenden Phasenwinkel zur Erzeugung des gewünschten Blindstroms (bzw. Blindleistung) einzustellen. Insoweit ist die Anordnung bekannt. Ferner vorgesehen ist ein Netzschutzschalter 18 am Transformator 8. Dieser wird über eine Steuerleitung 49 von der Betriebssteuerung 4 betätigt. Auch dies ist soweit bekannt.

Gemäß der Erfindung ist an dem Transformator 8, in dem dargestellten Ausführungsbeispiel auf der Unterspannungsseite, ein Sensor 51 für die Spannung an der Unterspannungswicklung 81 vorgesehen. Sie wird als ein Eingangssignal an einen Sollwertschieber 5 angelegt. Der Sollwertschieber 5 umfasst einen Regelkern 55, dem ein Differenzglied 53 vorgeschaltet ist. Dabei ist an einen Eingangswert des Differenzglieds das Signal für die gemessene Spannung auf der Niederseite angelegt und an den anderen Eingangswert ein Signal für die höchstzulässige Unterspannung Umax. Das Differenzsignal wird an den Eingang des Regelkerns 55 angelegt. Dieser Regelkern 55 ist in dem dargestellten Ausführungsbeispiel als PI-Regler ausgebildet. Die von ihm ausgegebene Steuergröße ist ein Blindstrommaß, welches an einen Begrenzer 57 angelegt ist, und dort auf Werte zwischen eines höchstzulässigen Maximalblindstroms $Ib_{max}$ und eines minimalzulässigen Blindstroms $Ib_{min}$ begrenzt ist. Der Sollwertschieber 5 weist einen zweiten parallelen Zweig auf, der entsprechend ein Differenzglied 54, einen Regelkern 56 und einen Begrenzer 58 aufweist. Das Differenzglied 54 bildet die Differenz zu einem Mindestwert für die Unterspannung Umin. Der Regelkern 56 und der Begrenzer 58 sind wie im ersten Zweig ausgebildet.

Die sich jeweils ergebenden Ausgangswerte sind als ein Ausgangsvektor des Sollwertschiebers 5 an ein Aufschaltmodul angelegt. Das Aufschaltmodul ist in dem dargestellten Ausführungsbeispiel als ein Begrenzungsmodul 59 ausgeführt, welcher das von der Betriebssteuerung 4 an die Umrichterregelung 33 angelegte Blindkomponentenstellsignal 43 modifiziert. Das geschieht in der Weise, dass in Abhängigkeit von der über den Sensor 51 gemessenen Spannung auf der Niederseite der Wert für den höchstens oder beziehungsweise mindestens zulässigen Blindstrommaß begrenzt wird, und das derart begrenzte Signal als modifiziertes Blindstrommaß an die Umrichterregelung 33 angelegt ist. Damit wird der Blindstromdurchfluss Q durch den Transformator 8 in Abhängigkeit von der Spannung derart beschränkt, dass ein zulässiges Toleranzfeld für einen sicheren Betriebsbereich eingehalten wird. Indem die Spannungsbegrenzung des Reglers 55, 56 die kritische Spannung auf der Unterspannungsseite mittels des Sensors 51 misst, und diese mit festen Sollwerten für die Unter- und Überspannung von beispielsweise 90% beziehungsweise 110% mittels der Differenzglieder 53, 54 vergleicht, kann der im jeweiligen Betriebspunkt noch zulässige Blindstrom gezielt eingestellt werden.

Ein Nachteil bei diesem Ausführungsbeispiel ist, dass eine Messstelle 51 auf der Unterspannungsseite des Transformators 8 erforderlich ist, welche an sich sonst nicht nötig wäre. Um den zusätzlichen Aufwand für diese Messstelle zu ersparen, kann alternativ ein Umrechnungsmodul 6 vorgesehen sein. Es umfasst im Wesentlichen ein Modellglied 61, das ein Streckenmodell des Transformators 8 enthält. Mit diesem kann aus gemessenen Werten für den Strom T1 und gegebenenfalls die Spannung U1 mittels in der Regel ohnehin vorhandener Sensoren 51 an der Oberspannungsseite des Transformators 8 der entsprechende Parameter U2* an der Unterspannungsseite bestimmt werden, ohne dass dafür zusätzliche Sensoren erforderlich wären. Der Sollwertschieber 5 arbeitet in diesem Fall also nicht mit echten Messwerten, sondern mit berechneten Ersatzgrößen (in Fig. 6 mit einem * kenntlich gemacht). Der erfindungsgemäße Sollwertschieber 5 ist dabei hinreichend robust, um sich daraus unvermeidbar ergebende kleinere Abweichungen zu tolerieren. Daher erreicht diese Variante des ersten Ausführungsbeispiels die volle erfindungsgemäße Wirkung, ohne dass dafür zusätzliche Sensorik erforderlich wäre.

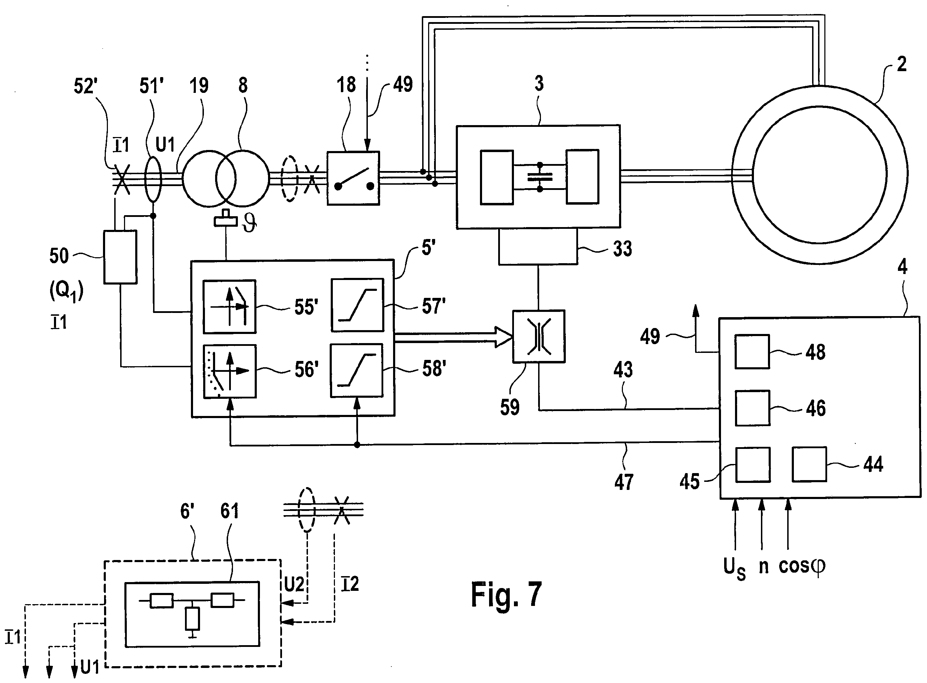

Ein zweites Ausführungsbeispiel der Erfindung ist in Figur 7 dargestellt. Es unterscheidet sich von dem in Figur 6 dargestellten ersten Ausführungsbeispiel im Wesentlichen durch die Ausführung des Sollwertschiebers 5' und andere Messstellen 51', 52'. Im Übrigen sind gleiche Elemente mit demselben Bezugszeichen versehen. Wie auch bei dem ersten Ausführungsbeispiel steuert in an sich bekannter Weise die Betriebssteuerung 4 den Umrichter 3 über ein Blindleistungsstellsignal 43, das an die schnelle Umregelung 34 angelegt ist.

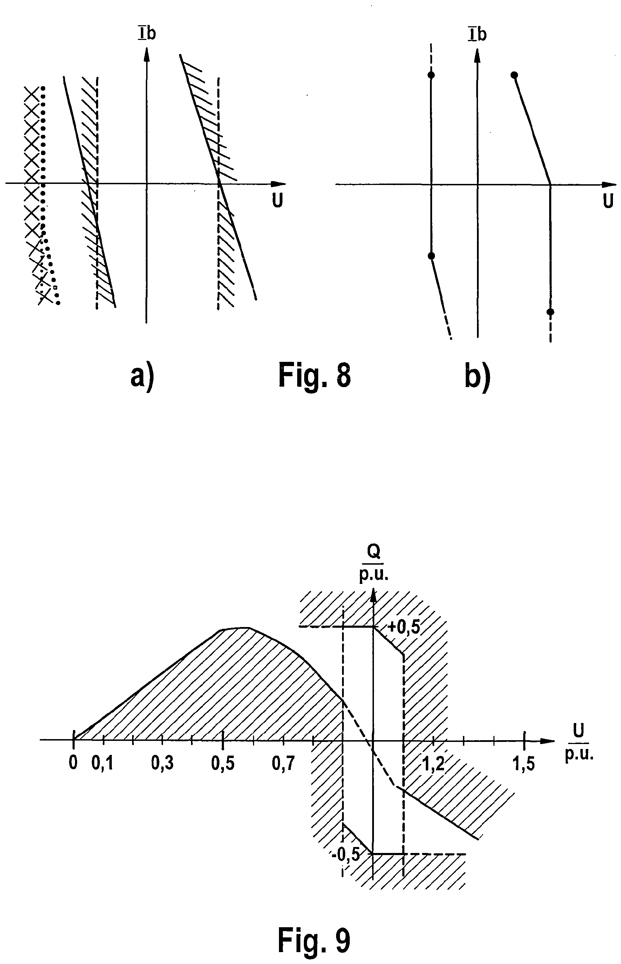

Die Messstellen für den Sollwertschieber 5' sind netzseitig des Transformators 8 angeordnet, und zwar im Bereich des Anschlusses der Netzzuleitung 19. Vorgesehen ist eine Messstelle für die Spannung 51' und eine Messstelle für den Strom 52'. Das Spannungssignal ist direkt an den Sollwertschieber 5' angelegt. Weiter ist es zusammen mit dem Stromsignal an ein Berechnungsglied 50 angeschlossen, welches aus diesen beiden Größen unter Berücksichtigung der Phasenverschiebung zwischen Spannung und Strom ein Maß für die von dem Transformator 8 tatsächlich an das Netz 9 abgegebene Blindleistung Q1 bzw. den Blindstrom Ib1 bestimmt. Das Maß ist ebenfalls an den Sollwertschieber 5' angelegt. Der Sollwertschieber 50' enthält einen Steuerungskern. Er ist im dargestellten Ausführungsbeispiel als Kennliniengied 55' mit einer Zweikreisstruktur ausgebildet. Es sei zuerst der obere Zweig für Überspannung erläutert. An die Eingänge des Kennliniengieds 55' ist jeweils ein Signal für die gemessene Spannung U1 und die gemessene Blindleistung Q1 bzw. den Blindstrom Ib1 angelegt. Das Steuerungselement 55' ist als Kennliniengied ausgebildet und weist nicht-lineare Steuerkurven auf. Die Steuerkurven sind zweckmäßigerweise so festgelegt, dass im oberen Zweig für Überspannung ein Ast ein konstanter Blindstrom bei Spannung unter oder bis einschließlich zur Nennspannung vorsieht, während der Blindstrom mit darüber hinaus ansteigender Spannung linear sinkt. Entsprechend ist die Steuerkurve des unteren Zweigs so gestaltet, dass bei Spannung oberhalb der Nennspannung und auch noch etwas unterhalb der Nennspannung der Blindstrom auf einem konstanten Wert liegt, während bei noch niedrigerer Spannung der Blindstrom erhöht wird. Dabei liegt die Kurve im Fall der Überspannung im kapazitiven und im Fall der Unterspannung im induktiven Bereich. Ein Vorteil dieser Variante besteht darin, dass keine Reglerparameter bestimmt zu werden brauchen und dass eine sehr schnelle Anpassung folgen kann, da eine Steuerung anders als eine Regelung keine regelungstechnischen Verzögerungen aufweist. Beispiele für eine derartige Steuerkurve sind in Figur 8a, b dargestellt. Es sei angemerkt, dass die vertikal eingezeichneten Abschnitte vorzugsweise nicht genau vertikal sind, sondern eine endliche Steigung aufweisen mit demselben Vorzeichen wie die Steigung in den geneigten Abschnitten. Damit wird eine Monotonie erreicht, die sich günstig auf die Stabilität der Steuerung auswirkt.

Die Verwendung einer Steuerung für den Sollwertschieber 5 bietet weiterhin den besonderen Vorteil, welcher ggf. unabhängigen Schutz verdient, dass in den Steuerkennlinien noch Zusatzfunktionen implementiert sein können. So kann insbesondere vorgesehen sein, die Steuerung wegen ihres guten dynamischen Verhaltens auch zum Ausgleich von dynamischer Über- beziehungsweise Unterspannung heranzuziehen. So kann vorgesehen sein, dass bei kurzzeitiger Überspannung im Netz (HVRT = High Voltage Ride Through) mittels der Steuerkurven sofort untererregter Blindstrom bereitgestellt wird. Dieser wirkt der Spannungsüberhöhung entgegen. Damit wird sowohl die Spannung im vorgelagerten Netz 9 (durch den Spannungsabfall an Netzreaktanzen) abgesenkt, wie auch im Inneren der Windenergieanlage 1 (und zwar durch den Spannungsabfall über den Transformator 8) und im Fall des (wie hier dargestellten) doppelt gespeisten Systems zusätzlich auch am maschinenseitigen Teil des Umrichters 3 (durch den Spannungsabfall an Reaktanzen des Generators 2). Eine Überspannung in dem Hochspannungsnetz von beispielsweise 130% der Nennspannung wird dadurch im Mittelspannungsnetz auf Werte von beispielsweise nur noch 120% der Nennspannung und innerhalb der Windenergieanlage 1 auf der Niederspannungsseite auf Werte von nur noch etwa 115% immer weiter abgebaut.

Dieser Effekt kann dadurch verstärkt werden, dass kurzzeitig ein sehr hoher, d.h. über den Nennstrom hinausgehender, Blindstrom zugelassen wird. Dann kann eine noch größere Verringerung der Überspannung erreicht werden. Entsprechendes gilt für den Fall von Unterspannungen im Netz (LVRT = Low Voltage Ride Through). Die Steuerkurve sorgt in diesem Fall sofort für übererregten Blindstrom, welcher spannungssteigernd wirkt. Dadurch wird das Spannungsniveau sowohl im vorgelagerten Netz 9, als auch im Inneren der Windenergieanlage 1 und im Fall des doppelt gespeisten Systems zusätzlich auch am maschinenseitigen Teil des Umrichters 3 angehoben. Unterspannungen im Netz werden dadurch in Richtung Windenergieanlage immer weiter abgebaut. Eine derartige Steuerkurvenimplementation, bei der sowohl für HVRT als auch für LVRT vorgesorgt ist, ist in Figur 9 dargestellt. Die nicht-schraffierten Bereiche kennzeichnen hierbei den Betriebsbereich der Windenergieanlage.

Dem Kennliniengied 55', 56' nachgeschaltet ist je ein Begrenzer-Modul 57', 58'. Es beschränkt die ausgegebenen Sollwerte für Blindstrom oder Blindleistung auf einen zulässigen Minimal- beziehungsweise Maximalwert. Die beiden von dem oberen und unteren Zweig ausgegebenen Werte werden als Begrenzungsvektor an ein Begrenzungsmodul 59 angelegt, welches in die Signalleitung für das Blindleistungsstellsignal 43 eingeschleift ist. Das von der Betriebssteuerung 4 übermittelte Blindkomponentenstellsignal für die Blindleistung beziehungsweise den Blindstrom wird mit dem erfindungsgemäßen Sollwertschieber so korrigiert.

Um die Reaktion auf kurzzeitige Störungen weiter zu verbessern, kann vorgesehen sein, dass in den Kennliniengliedern zusätzliche Dynamikkennlinien programmiert sind. Dies sei erläutert am Beispiel des Kennlienglieds 56'. Es enthalte zusätzlich (in Fig. 7 gepunktet dargestellt) eine zweite Kennlinie, welche erweiterte Grenzwerte für Kurzzeitbetrieb vorsieht. Das Kennlinienglied 56' schaltet auf diese zweite Kennlinie um, wenn ein entsprechendes Umschaltsignal über eine Steuerleitung 47 angelegt ist. Die Steuerleitung 47 ist angeschlossen an ein Dynamiksteuermodul 46. In dem dargestellten Ausführungsbeispiel ist es an der Betriebssteuerung 4 angeordnet. Dies braucht jedoch nicht zwingend so zu sein, sondern es kann auch als ein autarkes Modul ausgeführt sein oder als ein zusätzliches Funktionsmodul an dem Sollwertschieber 5' ausgeführt sein. Letzteres bietet den Vorteil kurzer Signalwege, so dass gerade bei hochdynamischen Fällen, wie kurzzeitigen Netzstörungen (LVRT bzw. HRVT) ein schnelles Ansprechen gewährleistet ist. Das von dem Dynamikmodul 46 generierte Ansteuersignal wird über die Steuerleitung 47 auch an den Begrenzer 58' angelegt und bewirkt, dass dieser auf erweiterte Grenzwerte umschaltet. Die sich dabei ergebende erweiterte Steuerkurve ist in Fig. 8a gepunktet dargestellt. Der Bereich bis zur Kreuzschraffierung wird durch diese Maßnahme zusätzlich für den Kurzzeitbetrieb gewonnen ist. Es sei angemerkt, dass eine entsprechende Erweiterung für dynamischen Betrieb auch an der oberen Spannungsgrenze vorgesehen sein kann (nicht dargestellt).

Wie auch bei der vorstehend diskutierten ersten Ausführungsform ist es nicht zwingend, dass die Messsensoren für Spannung beziehungsweise Strom 51', 52' auf der Oberspannungsseite des Transformators 8 angeordnet sind. Es kann auch vorgesehen sein, dass sie auf der Unterspannungsseite vorgesehen sind, insbesondere dann, falls dort ohnehin entsprechende Sensoren bereits vorhanden sind. In diesem Fall ist zweckmäßigerweise ein Umrechnungsmodul 6 vorgesehen, welches ein Streckenmodell 61' des Transformators 8 umfasst. Mittels dieses Umrechnungsmoduls 6 können aus den unterspannungsseitig gemessenen Werten entsprechende Werte auf der Oberspannungsseite gewonnen werden.

Der Sollwertschieber 5 wirkt vorzugsweise unmittelbar auf den Umrichter 3 ein. Zwar kann grundsätzlich eine direkte Einwirkung auf die einzelnen Schaltelemente (IGBT) vorgesehen sein, vorzuziehen ist aber eine indirekte Einwirkung auf die Umrichterregelung 33. Sie weist üblicherweise eine sehr hohe Dynamik auf. Damit können die vom Sollwertschieber 5 vorgegebenen Veränderungen der Sollwerte schnell umgesetzt werden, so dass die vorstehend beschriebene dynamische Ausgleichsfähigkeit erreicht wird. Allerdings kann es hierbei dazu kommen, dass der von der schnellen Regelung 33 des Umrichters 3 eingestellte Betriebszustand unter dem Einfluss des Sollwertschiebers 5 abweicht von demjenigen, welcher von der Betriebssteuerung 4 vorgegeben ist. Um dauerhafte Abweichungen zwischen dem Zustand gemäß der Betriebssteuerung 4 und dem tatsächlichen Zustand des Umrichters 3 zu vermeiden, ist zweckmäßigerweise vorgesehen, dass in der Betriebssteuerung 4 eine entsprechend dem Sollwertschieber 5 aufgebaute Funktionalität vorhanden ist. Dazu weist die Betriebssteuerung 4 vorzugsweise ein Kontrollmodul 45 auf. Das Kontrollmodul 45 bestimmt genauso wie der Sollwertschieber 5 Veränderungen für die Blindkomponente, die im Weiteren von der Betriebssteuerung 4 berücksichtigt sind. Vorzugsweise weist die Betriebssteuerung 4 weiter ein Lastschiebemodul 44 auf. Es ist dazu ausgebildet, dass bei einer Über- oder Unterspannung derart auf die übrige Betriebssteuerung 4 eingewirkt wird, den Wirkanteil der abgegebenen Leistung zugunsten des Blindanteils zu verringern. Damit kann auf der Stromschiene Kapazität gewonnen werden, um einen höheren Blindstrom einzuspeisen. Dies eignet sich insbesondere zum Ausgleich dynamischer Veränderung, wie bei kurzzeitiger dynamischer Überspannung (HVRT) und Unterspannung (LVRT).

Weiter kann das Kontrollmodul 45 mit einem Trennmodul 48 so zusammenwirken, dass es das Netzschutzrelais 18 mit einem variablen Grenzwert ansteuert, wobei der Grenzwert durch den abgegebene Blindstrom mitbestimmt ist. Damit trägt die Erfindung der Erkenntnis Rechnung, dass die Leistung des Transformators 8 durch die Hauptfeldspannung maßgeblich mitbestimmt ist, welche wiederum primär abhängig ist von der Spannung auf der Unterseite und nahezu unabhängig von der übertragenen Leistung ist. Der bisher bestehenden Gefahr, dass es auch bei niedriger Last zu einer unzulässigen Erwärmung des Transformators 8 kommen kann, wird damit entgegengewirkt, beziehungsweise erforderlichenfalls eine Abschaltung vorgenommen.

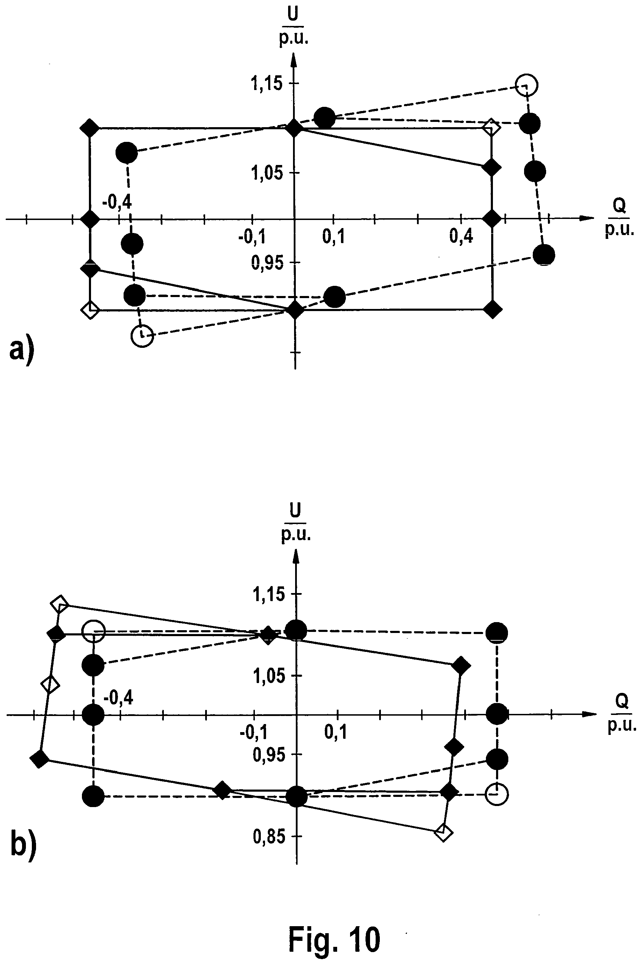

Die Funktionsweise und die Wirkung der Erfindung werden nachfolgend anhand der Figur 10 näher erläutert. Dargestellt im Koordinatensystem sind die normierte Blindleistung auf der X-Achse und die normierte Spannung auf der Y-Achse. Jeweils zeigen die durchgezogenen Linien die Netzspannung auf der Oberspannungsseite und die gestrichenen Linien die Spannung an der Unterspannungsseite des Transformators 8 an. Der zulässige Bereich der Spannungsabweichungen ist netzseitig auf +/- 10% festgelegt bei einer normalisierten Blindleistung ($Q/Q_{nenn}$), die bis zu 0,45 sowohl kapazitiv als auch induktiv betragen kann. Es ergibt sich damit ein Rechteck für den zulässigen Betriebsbereich. Es zeigt sich nun das Problem, dass es aufgrund der Spannungsabfälle über den Transformator 8 zu einer Verschiebung des Rechtecks kommt. Die Spannungen auf der Niederspannungsseite des Transformators 8 weichen ab (siehe dünne Linien in Figur 10A), und können insbesondere im Falle der Überspannung bei spannungserhöhender Blindleistung bis zu 15% über dem Nennwert liegen, und im Fall der Unterspannung bei spannungssenkender Blindleistung um bis zu 30% unter dem Nennwert liegen. Ein ausreichender Schutz der Windenergieanlage vor Über- oder Unterspannung ist damit nicht mehr gewährleistet.

Ganz ähnlich stellt sich die Situation dar, wenn nicht die Situation auf der Netzseite (Oberspannungsseite) des Transformators 8, sondern diejenige auf der Unterspannungsseite des Transformators 8 als Grundlage herangezogen wird (siehe dünne Linien in Figur 10A). Der zulässige Betriebsbereich ist durch das Rechteck dargestellt, welches die Verhältnisse auf der Unterspannungsseite darstellt. Man erkennt, dass netzseitig unzulässig hohe beziehungsweise niedrige Spannungen auftreten können.

Die durch die Erfindung erreichbare Verbesserung ist mit fetten Linien dargestellt. Das Spannungs-Blindleistungsdiagramm ist dahingehend optimiert, dass die Spannungen auf der Netzseite beschränkt sind, und zwar in Bezug auf den oberen Spannungswert bei spannungserhöhender Blindleistung und in Bezug auf den unteren Spannungswert bei spannungsabsenkender Blindleistung. Damit ergibt sich eine charakteristische, an einen Rombus angenäherte Gestalt der Umrandungslinien des zulässigen Betriebsbereichs. Man erkennt in Fig. 10A, dass bei richtiger Wahl der Parameter erreicht wird, dass die Verkippung durch den Transformator (gestrichelte dicke Linie) nicht mehr dazu führt, dass unzulässig hohe Werte für die Spannungsabweichung erreicht werden, und zwar weder bei Überspannung noch bei Unterspannung. Vielmehr bleiben die Spannungen im zulässigen Bereich. Damit erreicht die Erfindung, dass die Vorgabe sowohl auf der Netzseite des Transformators 8 als auch auf der Windenergieanlagenseite eingehalten wird. Entsprechendes gilt, wie aus Figur 10B ersichtlich ist, wenn die Verhältnisse auf der Unterspannungsseite 8 zur Grundlage genommen werden. Entsprechend wird (siehe gestrichelte dicke Linie) die Überspannung im Fall von spannungserhöhender Blindleistung beschränkt, und analog dazu die Unterspannung im Fall von spannungsabsenkender Blindleistung beschränkt.

## Patentansprüche

1. Windenergieanlage mit einem Rotor (12), einem davon angetriebenen Generator (2) mit einem Umrichter (3) zur Erzeugung elektrischer Leistung, die über einen Transformator (8), für den eine Spannungsüberwachung vorgesehen ist, in ein Netz (9) abgegeben wird und einem Steuersystem (4), das eine Umrichtersteuerung (34) umfasst, wobei das Steuersystem (4) ein Stellsignal für eine Blindkomponente an den Umrichter (34) über eine Signalleitung für das Blindleistungsstellsignal (43) anlegt,
**dadurch gekennzeichnet, dass**
in die Signalleitung für das Blindleistungsstellsignal (43) ein Begrenzungsmodul (59) eingeschleift ist und eine Spannungsmesseinrichtung (51) am Transformator (8) angeordnet ist, deren Spannungssignal an einen Eingang eines zustandsabhängigen Sollwertschiebers (5) angelegt ist, dessen Ausgangssignal an das Begrenzungsmodul (59) für die auf den Umrichter (3) wirkende Blindkomponente angelegt ist.

2. Windenergieanlage nach Anspruch 1, **dadurch gekennzeichnet, dass** der zustandsabhängige Sollwertschieber (5) dazu ausgebildet ist, die Blindkomponente bei Überspannung zum Untererregten hin zu verschieben und bei Unterspannung zum Übererregten hin zu verschieben.

3. Windenergieanlage nach Anspruch 1 oder 2, **dadurch gekennzeichnet, dass** der Sollwertschieber (5) mit einem Lastschiebemodul (44) zusammenwirkt, das bei einer Unter- oder Überspannung derart auf das Steuersystem (4) einwirkt, dass der Wirkanteil der abgegebenen Leistung zugunsten des Blindanteils verringert ist.

4. Windenergieanlage nach einem der vorangehenden Ansprüche, **dadurch gekennzeichnet, dass** ein Temperatursensor (85) für einen Kern des Transformators (8) vorgesehen ist, dessen Signal als weiteres Zustandssignal an einen Eingang des Sollwertschiebers (55) angelegt ist.

5. Windenergieanlage nach einem der vorangehenden Ansprüche, **dadurch gekennzeichnet, dass** das Steuersystem (4) ein Kontrollmodul (45) aufweist, das einen zweiten gleichartigen Sollwertschieber umfasst.

6. Windenergieanlage nach einem der vorangehenden Ansprüche, **dadurch gekennzeichnet, dass** das Steuersystem (4) ein Trennmodul (48) mit variablem Grenzwert umfasst, das auf ein Netzschutzrelais (18) am Transformator wirkt und dessen Grenzwert durch die abgegebene Blindleistung mitbestimmt ist.

7. Windenergieanlage nach einem der vorangehenden Ansprüche, **dadurch gekennzeichnet, dass** der Sollwertschieber (5) mit einem Streckenmodell (61) des Transformators zusammenwirkt, an dem die Spannungen an einer Seite des Transformators (8) angelegt ist zur Bestimmung der Spannung an der anderen Seite des Transformators (8).

8. Windenergieanlage nach Anspruch 7, **dadurch gekennzeichnet, dass** das Streckenmodell (61) zur entsprechenden Blindkomponentenbestimmung ausgebildet ist.

9. Windenergieanlage nach einem der vorangehenden Ansprüche, **dadurch gekennzeichnet, dass** der Sollwertschieber (5) einen PI-Regler (55) umfasst, der vorzugsweise so ausgebildet ist, um aus einer Spannungsdifferenz zu einem Grenzwert einen Korrekturwert für die Blindkomponente zu bestimmen.

10. Windenergieanlage nach einem der Ansprüche 1 bis 8, **dadurch gekennzeichnet, dass** der Sollwertschieber (5') ein Steuerelement (55') umfasst, das vorzugsweise so ausgebildet ist, um aus angelegten Signalen für Spannung und Blindleistung einen Blindleistungskorrekturwert zu bestimmen.

11. Windenergieanlage nach Anspruch 10, **dadurch gekennzeichnet, dass** das Steuerelement (55') ein zweidimensionales Kennlinienglied mit monoton fallenden Kennlinien ist oder eine Sollwertmatrix aufweist.

12. Windenergieanlage nach einem der Ansprüche 9 bis 11, **dadurch gekennzeichnet, dass** eine zweikreisige Struktur vorgesehen ist mit einem Kreis für Über- und einem für Unterspannung aufweist.

13. Windenergieanlage nach einem der Ansprüche 9 bis 12, **dadurch gekennzeichnet, dass** eine Umschalteinrichtung (46) vorgesehen ist, die einen Kurzzeitbetrieb mit erweiterten Grenzwerten erlaubt.

14. Verfahren zum Betreiben der Windenergieanlage mit einem Rotor (12), einem davon angetriebenen Generator (2) mit einem Umrichter (3) zur Erzeugung elektrischer Leistung, die über einen Transformator (8) in ein Netz (9) abgegeben wird, wobei eine Spannung an dem Transformator (8) überwacht wird, und einem Steuersystem (4), das eine Umrichtersteuerung (33) umfasst,
mit einem Einstellen eines Stellsignals für eine Blindkomponente der abgegebenen Leistung,
**gekennzeichnet durch**
Messen einer Spannung am Transformator (8), Bestimmen eines Korrektursignals für das Blindleistuhgsmaß mittels eines zustandsabhängigen Sollwertschiebers (5), und Verwenden dieses verschobenen Signals zur Begrenzung des Stellsignals der Blindkomponente.

15. Verfahren nach Anspruch 14, **gekennzeichnet durch** Verwenden eines Sollwertschiebers (5) nach einem der Ansprüche 1 bis 13.

**Claims**

1. Wind energy installation with a rotor (12), a generator (2) driven thereby and having a converter (3) for generating electrical power which is output into a power supply system (9) via a transformer (8), for which voltage monitoring is provided, and an open-loop control system (4), which comprises an open-loop converter control unit (34), the open-loop control system (4) supplying an actuating signal for a reactive component to the converter (34) via a signal line for the reactive power activating signal (43),
**characterized in that**
a limitation module (59) is looped into the signal line for the reactive power actuating signal (43) and a voltage measurement device (51) is arranged on the transformer (8), the voltage signal of said voltage measurement device being applied to an input of a state-dependent setpoint value shifter (5), whose output signal is applied to the limitation module (59) for the reactive component acting on the converter (3).

2. Wind energy installation according to Claim 1, **characterized in that** the state-dependent setpoint value shifter (5) is designed to shift the reactive component in the event of an overvoltage toward the underexcited status and in the event of an undervoltage toward the overexcited status.

3. Wind energy installation according to Claim 1 or 2, **characterized in that** the setpoint value shifter (5) interacts with a load shifting module (44), which acts on the open-loop control system (4) in the event of an undervoltage or overvoltage in such a way that the active portion of the output power is reduced in favor of the reactive portion.

**4.** Wind energy installation according to one of the preceding claims, **characterized in that** a temperature sensor (85) is provided for a core of the transformer (8), the signal from said temperature sensor being applied, as further state signal, to an input of the setpoint value shifter (55).

**5.** Wind energy installation according to one of the preceding claims, **characterized in that** the open-loop control system (4) has a monitoring module (45), which comprises a second identical setpoint value shifter.

**6.** Wind energy installation according to one of the preceding claims, **characterized in that** the open-loop control system (4) comprises an isolating module (48) with a variable limit value which acts on a system protection relay (18) at the transformer and whose limit value is also determined by the output reactive power.

**7.** Wind energy installation according to one of the preceding claims, **characterized in that** the setpoint value shifter (5) interacts with a section model (61) of the transformer, to which the voltage on one side of the transformer (8) is applied in order to determine the voltage on the other side of the transformer (8).

**8.** Wind energy installation according to Claim 7, **characterized in that** the section model (61) is designed for corresponding reactive component determination.

**9.** Wind energy installation according to one of the preceding claims, **characterized in that** the setpoint value shifter (5) comprises a PI controller (55) which is preferably configured to determine a correction value for the reactive component from a voltage difference with respect to a limit value.

**10.** Wind energy installation according to one of Claims 1 to 8, **characterized in that** the setpoint value shifter (5') comprises an open-loop control element (55') which is preferably configured to determine a reactive power correction value from applied signals for voltage and reactive power.

**11.** Wind energy installation according to Claim 10, **characterized in that** the open-loop control element (55') is a two-dimensional characteristic element with monotonically falling characteristics or has a setpoint value matrix.

**12.** Wind energy installation according to one of Claims 9 to 11, **characterized in that** a two-loop structure is provided with one loop for overvoltage and one for undervoltage.

**13.** Wind energy installation according to one of Claims 9 to 12, **characterized in that** a switchover device (46) is provided which enables short-term operation with extended limit values.

**14.** Method for operating the wind energy installation with a rotor (12), a generator (2) driven thereby and having a converter (3) for generating electrical power which is output into a power supply system (9) via a transformer (8), wherein a voltage across the transformer (8) is monitored, and an open-loop control system (4) which comprises an open-loop converter control unit (33),
with adjustment of an actuating signal for a reactive component of the output power,
**characterized by**
measurement of a voltage across the transformer (8), determination of a correction signal for the degree of reactive power by means of a state-dependent setpoint value shifter (5), and the use of this shifted signal for limiting the actuating signal of the reactive component.

**15.** Method according to Claim 14, **characterized by** the use of a setpoint value shifter (5) according to one of Claims 1 to 13.

**Revendications**

**1.** Aérogénérateur comprenant un rotor (12), un générateur (2) entraîné par celui-ci et pourvu d'un convertisseur (3) destiné à générer de l'énergie électrique, laquelle est délivrée dans un réseau (9) par le biais d'un transformateur (8) pour lequel il existe une surveillance de tension, et un système de commande (4), lequel comporte une commande de convertisseur (34), le système de commande (4) appliquant un signal de réglage pour une composante réactive au convertisseur (34) par le biais d'une ligne de signal pour le signal de réglage de puissance réactive (43),
**caractérisé en ce que**
un module de limitation (59) est bouclé dans la ligne de signal pour le signal de réglage de puissance réactive (43) et un dispositif de mesure de tension (51) est disposé sur le transformateur (8), dispositif de mesure de tension dont le signal de tension est appliqué à une entrée d'un registre de valeur de consigne (5) dépendant de l'état, dont le signal de sortie est appliqué au module de limitation (59) pour la composante réactive agissant sur le convertisseur (3) .

**2.** Aérogénérateur selon la revendication 1, **caractérisé en ce que** le registre de valeur de consigne (5) dépendant de l'état est configuré pour, en cas de surtension, décaler la composante réactive vers une sous-excitation et, en cas de sous-tension, décaler la composante réactive vers une surexcitation.

**3.** Aérogénérateur selon la revendication 1 ou 2, **caractérisé en ce que** le registre de valeur de consigne (5) coopère avec un module de décalage de charge (44) qui, en cas d'une sous-tension ou d'une surtension, agit sur le système de commande (4) de telle sorte que la part active de l'énergie délivrée est réduite en faveur de la part réactive.

**4.** Aérogénérateur selon l'une des revendications précédentes, **caractérisé en ce qu'**une sonde de température (85) est présente pour un noyau du transformateur (8), dont le signal est appliqué à une entrée du registre de valeur de consigne (55) en tant que signal d'état supplémentaire.

**5.** Aérogénérateur selon l'une des revendications précédentes, **caractérisé en ce que** le système de commande (4) possède un module de contrôle (45) qui comporte un deuxième registre de valeur de consigne identique.

**6.** Aérogénérateur selon l'une des revendications précédentes, **caractérisé en ce que** le système de commande (4) comporte un module de séparation (48) ayant une valeur limite variable, lequel agit sur un relais de protection du réseau (18) sur le transformateur et dont la valeur limite est déterminée conjointement par la puissance réactive délivrée.

**7.** Aérogénérateur selon l'une des revendications précédentes, **caractérisé en ce que** le registre de valeur de consigne (5) coopère avec un modèle de tronçon (61) du transformateur, auquel sont appliquées les tensions sur un côté du transformateur (8) afin de déterminer la tension de l'autre côté du transformateur (8) .

**8.** Aérogénérateur selon la revendication 7, **caractérisé en ce que** le modèle de tronçon (61) est configuré pour la détermination correspondante de la composante réactive.

**9.** Aérogénérateur selon l'une des revendications précédentes, **caractérisé en ce que** le registre de valeur de consigne (5) comporte un régulateur PI (55) qui est de préférence configuré pour déterminer une valeur de correction pour la composante réactive à partir d'une différence de tension par rapport à une valeur limite.

**10.** Aérogénérateur selon l'une des revendications 1 à 8, **caractérisé en ce que** le registre de valeur de consigne (5') comporte un élément de commande (55') qui est de préférence configuré pour déterminer une valeur de correction de puissance réactive à partir des signaux appliqués pour la tension et la puissance réactive.

**11.** Aérogénérateur selon la revendication 10, **caractérisé en ce que** l'élément de commande (55') possède un élément à courbes caractéristiques bidimensionnel ayant des courbes caractéristiques à décroissance monotone ou une matrice de valeurs de consigne.

**12.** Aérogénérateur selon l'une des revendications 9 à 11, **caractérisé en ce qu'**une structure à deux circuits est prévue, avec un circuit pour la surtension et un pour la sous-tension.

**13.** Aérogénérateur selon l'une des revendications 9 à 12, **caractérisé en ce qu'**un dispositif d'inversion (46) est prévu, lequel permet un fonctionnement de courte durée avec des valeurs limites étendues.

**14.** Procédé pour faire fonctionner l'aérogénérateur comprenant un rotor (12), un générateur (2) entraîné par celui-ci et pourvu d'un convertisseur (3) destiné à générer de l'énergie électrique, laquelle est délivrée dans un réseau (9) par le biais d'un transformateur (8), une tension étant surveillée sur le transformateur (8), et un système de commande (4), lequel comporte une commande de convertisseur (33),
comprenant un réglage d'un signal de réglage pour une composante réactive de la puissance délivrée, **caractérisé par**
la mesure d'une tension sur le transformateur (8), la détermination d'un signal de correction pour la mesure de la puissance réactive au moyen d'un registre de valeur de consigne (5) dépendant de l'état et l'utilisation de ce signal décalé pour limiter le signal de réglage de la composante réactive.

15. Procédé selon la revendication 14, **caractérisé par** l'utilisation d'un registre de valeur de consigne (5) selon l'une des revendications 1 à 13.

Fig. 1

1 11 2 12

9

3

10 13

19 18 8

Fig. 2

a) 9 8 3' 2'

b) 9 8' 3' 2'
3'

c) 9 8 13 2
3

d) 9 8' 2
3

# Fig. 3

a)

b)

# Fig. 5

$$\bar{I} = \bar{I}_W + j\,\bar{I}_b$$

Fig. 4

a) b)

Fig. 6

EP 2 266 178 B1

19

Fig. 7

a)  Fig. 8  b)

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10344392 A

- DE 102007005165